# EUROPEAN PATENT SPECIFICATION

(11) **EP 1 419 685 B1**
(45) Date of publication and mention of the grant of the patent: **28.03.2007**
(21) Application number: 03078453.2
(22) Date of filing: 03.11.2003
(51) Int. Cl.: A01D 34/42, A01D 34/63

(54) **Lawn-mower frame**
Traggestell für Rasenmäher
Chassis de support pour tondeuse à gazon

(30) Priority: 14.11.2002 IT MI20020528 U
(43) Date of publication of application: 19.05.2004
(73) Proprietor: Megagroup S.p.A., 23897 Vigano' (LC) (IT)
(72) Inventor: Calegari, Felice, 21020 Taino Varese (IT)
(74) Representative: Riccardi, Sergio

(56) References cited:
- DE-A- 4 323 178
- GB-A- 517 726
- GB-A- 804 403
- GB-A- 881 097
- US-A- 2 871 644
- US-A- 3 176 454
- US-A- 3 521 434

## Description

This invention refers to a lawn-mower frame that presents significant and original characteristics of usefulness and convenience of use.

Several types of lawn-mowers manually driven by the operator are available on the market at the moment, whose frame is made of sheet steel, injection moulded plastic material or aluminium casting, in its pressure die-casting, low-pressure fusion or gravity in the chill casting versions. Such a mower is known, for example, from GB-A-804 403.

But all these types of frames present, alongside some advantages, some corresponding disadvantages, as well. Like for instance while the sheet steel is shock resistant, it does nevertheless rust and it is heavy and therefore the lawn-mower is difficult to drive. On the contrary, the frame that is made by plastic or aluminium casting is light and does not rust, but instead it is shock sensitive and may break as a consequence, the costs of the tools for pressure die-casting are considerably higher and said tools are to wear and tear as well and have therefore high depreciation costs.

The present invention solves these problems brilliantly, by making for the first time a lawn-mower frame in drawn aluminium sheet or plate. In this way, a frame that is not subjected to any of the aforementioned disadvantages is obtained, being rust proof, light and not prone to break, thus with greater sturdiness and greater shock resistance, while at the same time the cost of said tools is reasonable and said tools have a longer life resulting in lower depreciation costs.

Furthermore, the objects, characteristics and advantages of said lawn-mower frame will be apparent from the following description of a preferred embodiment of the invention given as an illustrative, but non-limiting, example and shown in the accompanying sheets of drawings in which:

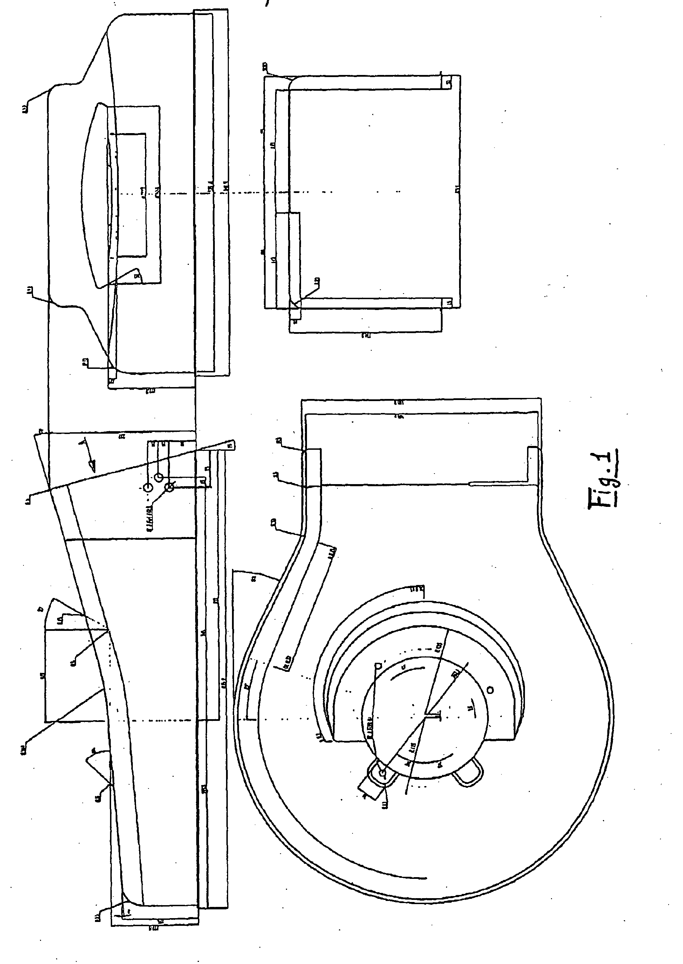

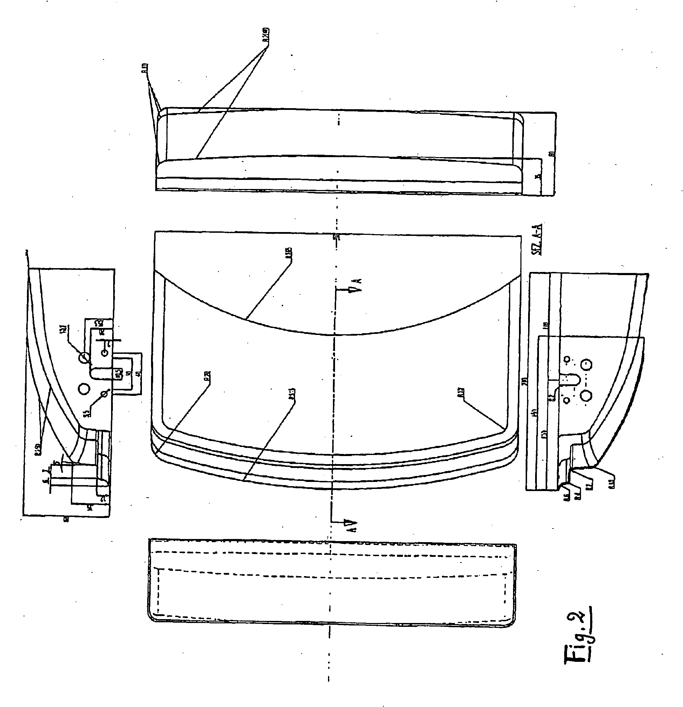

Figure 1 shows a top, lateral, front and rear view, respectively according to the arrow A, the body of the frame with the indications relative to the different shapes, bends and dimensions necessary for its drawing. Said body may be made of various lengths; and Figure 2 shows a top, lateral, front and rear view, respectively, as well as in section taken along the central axis A-A, the nose of the lawn-mower, also provided with the aforementioned indications. Said two parts, body and nose, are then welded together.

It is clear that with the use of the drawn aluminium sheet as material, the aforementioned objects, characteristics and advantages are fully obtained, as defined also in the appended claims.

## Claims

1. A lawn-mower frame, **characterized by** being made of drawn aluminium sheet or plate.

2. The lawn-mower frame according to Claim 1, **characterized by** comprising two parts, i.e. body and nose.

3. The lawn-mower frame according to Claim 2, **characterized in that** said two parts are then assembled through welding.

## Patentansprüche

1. Traggestell für Rasenmäher, **dadurch gekennzeichnet, dass** es aus Ziehaluminiumfolie bzw.-platte hergestellt wird.

2. Traggestell für Rasenmäher nach Anspruch 1, **dadurch gekennzeichnet, dass** es aus zwei Teilen, nämlich Körper und Haube besteht.

3. Traggestell für Rasenmäher nach Anspruch 2, **dadurch gekennzeichnet, dass** die beiden Teilen danach durch Schweissen zusammengebaut werden.

## Revendications

1. Châssis de support pour tondeuse à gazon **caractérisé en ce qu'**il est fabriqué en feuille ou plaque d'aluminium embouti.

2. Châssis de support pour tondeuse à gazon selon la revendication 1, **caractérisé en ce qu'**il comprend deux parties, c'est-à-dire corps et nez.

3. Châssis de support pour tondeuse à gazon selon la revendication 2, **caractérisé en ce que** les dites deux parties sont après assemblées par soudure.
